# EUROPEAN PATENT SPECIFICATION

(11) **EP 3 357 322 B1**
(45) Date of publication and mention of the grant of the patent: **16.09.2020**
(21) Application number: 18154662.3
(22) Date of filing: 01.02.2018
(51) Int. Cl.: A01D 45/00

(54) **SYSTEM FOR HARVESTING ASPARAGUS IN GROUND**
SYSTEM ZUR ERNTE VON SPARGEL IM BODEN
SYSTÈME POUR RÉCOLTER DES ASPERGES DANS LE SOL

(30) Priority: 02.02.2017 NL 2018290
(43) Date of publication of application: 08.08.2018
(73) Proprietor: Cerescon Holding B.V., 5666 BW Geldrop (NL)
(72) Inventor: Vermeer, Adrianus Johannes Petrus Maria, 5666 BW Geldrop (NL)
(74) Representative: V.O.

(56) References cited:
- EP-A1- 1 266 559
- DE-A1-102009 011 368
- DE-A1-102010 001 300
- DE-A1-102012 018 745

## Description

### FIELD OF THE INVENTION

The invention relates to a system for harvesting of asparagus.

### BACKGROUND TO THE INVENTION

Asparagus harvesting may be challenging and labor intensive. During the growing season sprouts can advance upwardly through the soil to finally appear as tips penetrating through the ground surface, wherein conventionally based on the location of the detected tips, the sprout can be cut off by a knife thrust into the bed after which the cut sprout is lifted from the bed. Generally, a harvest season extends over a period of several weeks, during which time the plant bed must be harvested repeatedly to remove the sprouts as they appear.

White asparagus grow undergrounds, typically in well prepared earth dams. The asparagus plants may remain productive for circa 10 years. Plant seedlings are typically placed in a sandy enclosure in the earth dam. The size of the crowns, i.e. underground bodies of the asparagus plants, can increase as the asparagus ages, so the bed will eventually become completely filled with roots and the width of the sprout position distribution will widen.

It is well known that white asparagus may be a result from the process of deprivation of light. The asparagus spears in the soil are not exposed to light and cannot produce chlorophyll, thus maintaining its white color. The asparagus spears are quite sensitive to light and may change color if exposed to (day)light. Typically, this process already starts as the spears reach the upper few centimeters under the soil surface. The coloring of asparagus can be considered as a quality deterioration and therefore may reduce the commercial value of the asparagus harvest. In the prior art, this effect is counteracted by the use of foil to exclude light. Furthermore, the head can slightly open (as a flower) as soon as the counter pressure of the sand reduces in the top area of the sand bed. This may also result in a value reduction. For these reasons, it would be very attractive if it were possible to already harvest the asparagus while the spear heads were still at a sufficient depth below the surface. Therefore, an accurate subsurface detection method is required which cannot be provided by classical solutions.

Furthermore, asparagus spears tend to mature rather randomly and not in a controlled cycle. The spears typically do not grow in straight rows, but are spread out in a scattered pattern. Moreover, the height of the spears or the distance to the soil surface is subject to wide variation. Also, the thickness or diameter of the spears is not constant. The immature spears are sensitive and can be relatively easily become damaged and broken by contact and/or rough handling during harvesting of mature spears. It would therefore be beneficial if it were possible to harvest the asparagus leaving immature spears undamaged. This would significantly increase the efficiency and the quality of the harvesting. This is particularly challenging since the spears may grow relatively close to one another in no particular pattern.

EP1266559 discloses the features of the preamble of claim 1. DE102012018745 discloses a cutting tool having a support that spreads between a rotatable knife and a stop member, to support a cut asparagus. DE102009011368 is mentioned as background. It is an aim to provide an asparagus cutting tool and system therefor, designed to overcome these problems.

### SUMMARY OF THE INVENTION

The method according to the current disclosure, which does not fall under the scope of the appended claims, can be employed for asparagus harvest. The invention which is achieved according to claim 1, defines a system for harvesting asparagus in ground comprising a cutting tool. The cutting tool is connectable to an actuator, and is movable, controlled by said actuator, relative to an asparagus, for performing localized harvesting of the asparagus. During harvesting, the cutting tool is moved by the actuator to a cutting depth for cutting the asparagus. The cutting tool comprises a cutting edge part and a linkage connecting the cutting edge part to the actuator, in order to exert a cutting movement of the cutting edge part from a rest position to a cutting position. The linkage comprises at least one link arm with a catch structure for catching the asparagus when exerting the cutting movement.

Advantageously, the method can be employed for detection of asparagus followed by a localized harvesting of detected asparagus located below a ground surface.

Optionally, the movement path of the proximity sensor is adjusted so as to evade collision with the asparagus detected by a proximity sensor, while registering a location of the proximity sensor where the asparagus is detected.

In an embodiment, a cutting tool, one or more proximity sensors, and a grabber are arranged on a harvester arrangement for performing localized harvesting of the asparagus. All this can be integrated in a single tool.

In principle, proximity detection below the ground surface can be carried out using a number of known measurement principles for a proximity sensor. The proximity sensor may for example be arranged for underground proximity detection of asparagus and can be of various types, such as electrical, chemical, vibrational, acoustic, photonic (light), mechanical, electromagnetic, magnetic, piezoelectric, machine olfaction based, etc. Advantageously, properties such as the high water content of asparagus compared to its surrounding (soil) can be exploited for obtaining a sensor able to proximity detect a subsurface asparagus. For example, a time domain reflectometry can be carried out in a circuit, where part or the soil serves as a transmission line, and wherein the humidity and presence of the asparagus can be detected through change in reflectivity of a step signal. In a simple form, this can be carried out with a single electrode, but it may also be carried out with more than one electrodes and additional electrodes for shaping an electric field, for example by an electric field having a strong density of field strength in forward direction. Other properties can also be utilized for obtaining a subsurface proximity sensor, such as chemical properties. It may be desirable that the subsurface proximity sensor has a sufficiently small reaction time since it is moved below the ground surface with a certain velocity.

Optionally, the proximity sensor comprises at least one impedance sensor for proximity detection of asparagus below the ground surface.

In an embodiment, the proximity sensor comprises at least one of a capacitive and/or a resistive proximity impedance sensor for proximity detection of asparagus below the ground surface. The proximity sensors may be tuned for detection of asparagus by taking into account typical properties of asparagus, for example the fact that water may make up more than 90% of asparagus's composition.

In case of a capacitive proximity sensor, the sensor is based on a change in capacity. Such change in capacity may depend on the distance between the electrodes, electrode surface area, and permittivity of the medium in between. Since an asparagus typically contains more than 90% water, the factor between the dielectric properties of water and mineral soil may be sufficient for detecting a difference between soil (even wetted or moist soil) and an asparagus. Therefore, such a sensor may provide high robustness for variation in soil properties (e.g. water content), while being able to perform a contactless detection of an asparagus inside the soil. The sensor head of the proximity sensor induces field lines through a front portion of the sensor head. The field lines can be influenced by an asparagus in vicinity of the sensor head of the capacitive proximity sensor.

Alternatively or additionally, an electromagnetic signal can be transmitted in a direction of an asparagus with a frequency in a range of 1-10 GHz configured for increasing the temperature of the asparagus. The electromagnetic signal may for instance be transmitted by a microwave transmitter. A thermal proximity sensor can be obtained by employing a thermocouple arranged to measure temperature so as to detect asparagus as a result of a heat signature of the asparagus. Asparagus may include more than 90% water, while the soil may e.g. include 5-15% water. As a result of the microwaves, the temperature of the asparagus (and it's vicinity due to thermal transfer) can rise more strongly compared to the soil. This can enable underground proximity detection of the asparagus by using thermocouple or the like as the subsurface proximity sensor.

Optionally, a plurality of proximity sensors are arranged on a scanning assembly, each proximity sensor having a scanning area defined by a proximity detection range of the proximity sensor. In such an embodiment, one or more proximity sensors are arranged next to each other on a first row, and one or more proximity sensors are arranged next to each other at least on a second row displaced from the first row in a longitudinal scanning direction, such that the scanning areas of the proximity sensors cover an entire scanning width transverse to a longitudinal scanning direction.

In this way, the soil can be more efficiently scanned for subsurface asparagus. Each proximity sensor can have a proximity detection range, which defines a region surrounding the proximity sensor in which an asparagus can successfully be detected while being located below the ground surface. In an embodiment, a plurality of proximity sensors may be arranged in such a fashion that substantially an entire scanning width transverse to a longitudinal scanning direction can be covered so as to be able to scan a complete region (e.g. plane, volume, etc.) while the proximity sensors are moved only in a longitudinal direction. In an embodiment, during scanning, wherein the plurality of proximity sensors are being moved in the longitudinal direction, the relative distance between the plurality of proximity sensors may be maintained. However, once an asparagus is detected by a proximity sensor, the movement path of the relevant proximity sensor may be adjusted, wherein the relative distance with respect to the other proximity sensors in the scanning assembly can change. In an embodiment, the forward moving speed in the longitudinal direction of the scanning assembly can be changed for one or more proximity sensors being able to carry out the adjustment of the scanning path. Subsequently, the scanning assembly can be moved again at the previous forward moving speed when the necessary adjustments are performed. In this way, collision with asparagus can be prevented and/or localized harvesting of a detected asparagus may be performed.

In an embodiment, the proximity sensors can have different scanning depths with respect to each other. A first group can be arranged to scan at a first depth and a second group can be arranged to scan at a second depth, displaced from the first depth.

It will be appreciated that any of the aspects, features and options described in view of the harvesting system apply equally to the described methods. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a perspective view of an embodiment of a system for harvesting of asparagus;
Fig. 2a shows a bottom view of an embodiment of a system;
Fig. 2b shows a side view of an embodiment of a system;
Fig. 3 (A and B) show side views of alternative embodiments;
Fig. 4 (A and B) shows an alternative catch structure;
Fig. 5 (A and B) shows an alternative variation of a linkage;
Fig. 6 (A and B) shows a perspective view of an embodiment of a system;
Fig. 7 shows a proximity sensor and a schematic electrical diagram of a proximity sensor of an embodiment;
Fig. 8 shows a graph of sensed data of an embodiment; and
Fig. 9 shows an embodiment of an actuator assembly part arranged to drive the linkage.

### DETAILED DESCRIPTION

Unless otherwise defined, all terms used herein have the same meaning as commonly understood by one of ordinary skill in the art to which this invention belongs as read in the context of the description and drawings.

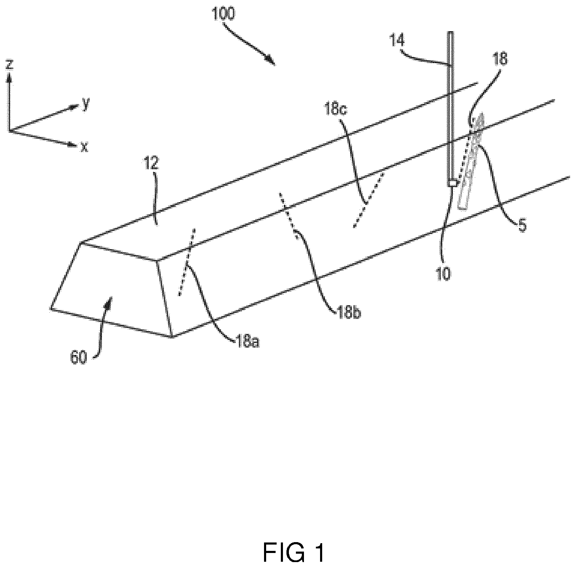

Fig. 1 shows a perspective view of an embodiment of the system 100 for detecting and/or harvesting an asparagus 5 from elongated earth dams 60. Preferably the asparagus 5 can be detected individually. The sensed information can then be used for individual harvesting of the asparagus using a cutting tool 14 having a proximity sensor 10 attached to it. The cutting tool is inserted below the ground surface 12 of the elongated earth dam 60 and moved in a longitudinal scanning direction (A), which corresponds to the y-axis in the figure. Upon detection of an asparagus 5, the movement scanning path of the proximity sensor 10 is adjusted, in this example the proximity sensor is arranged to follow a detected outer surface of the detected asparagus 5. In the figure, the proximity sensor has encountered four asparagus18, 18a-c, wherein for the first three asparagus lines 18, 18b, 18c have been determined following the asparagus to the cutting depth. The proximity sensor 10 is scanning the fourth asparagus 18 and moving to the cutting depth, while registering the movement of the proximity sensor 10 so as to be able to localize the asparagus 5. The lines can provide a three-dimensional location and orientation (x, y, z) of the detected asparagus inside the elongated earth dam 60. This information can be utilized for efficient harvesting of the asparagus. In an embodiment, the proximity sensor 10 of system 100 can derive whether the detected asparagus is mature, based on sensed information. In an exemplary embodiment, in case an immature asparagus is detected, the system 100 can be arranged to adjust the movement scanning path so as to evade collision with the immature asparagus, e.g. by a biased retraction force extracting the sensor 10 from the soil.

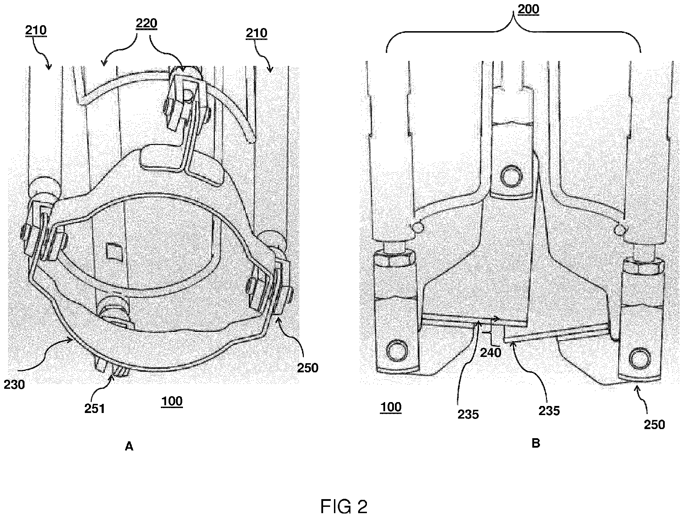

Figure 2 shows an exemplary schematic of the cutting tool 100. In this embodiment linkage 200 comprises a rod 220 connectable to the actuator, said rod 220 formed with distal parts forming first hinged connections 250 on opposite ends of cutting edge part 230. The cutting edge is connected to a link arm 210 by a second hinged connection 251, arranged to pivot the cutting edge 230 around the first hinged connection 250. In the invention, the linkage 200 comprises at least two link arms 210, 220 arranged for relative movement to each other, said two link arms pivotally arranged relative to said cutting edge part 230, so that the cutting edges 230 are pivoted around a hinge part 250 from the rest position to the cutting position.

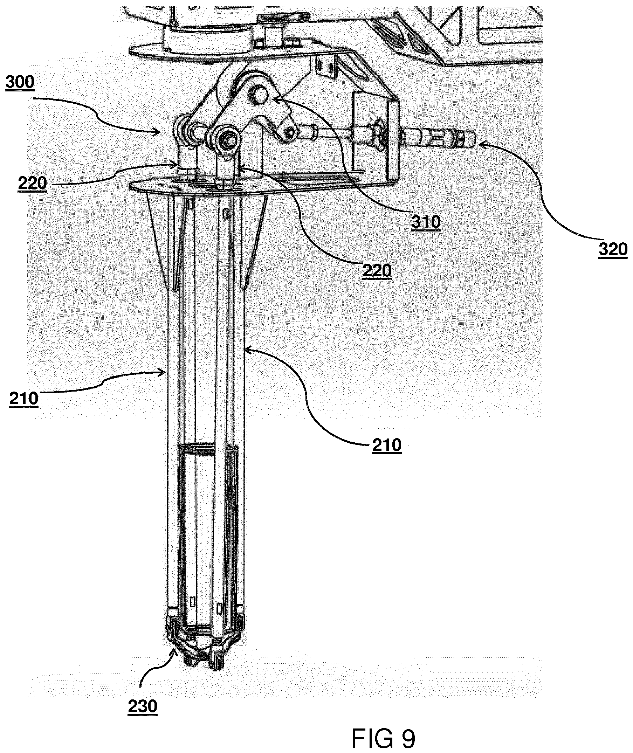

Link arms 220 form further part of linkage 200, comprising rod arms that can displace relative to each other. The cutting tool 100 is thus movable, controlled by an actuator (see e.g. Fig 9) in up and downward direction, relative to an asparagus, for performing localized harvesting of the asparagus. During localized harvesting, the cutting tool 100 is moved to a cutting depth for cutting the asparagus. The cutting tool comprises a cutting edge part 230 and linkage 200 connecting the cutting edge part 230 to another actuator, in order to exert a cutting movement of the cutting edge 230 part from a rest position depicted in Figure 2A, to a cutting position depicted in Figure 2B. As can be seen there, in the cutting position, the cutting edge parts 230 in the cutting position display a slight overlap 240 at different heights relative to an asparagus. In this way, the knives move without touching each other, which benefits to the life span of the knife and the amount of soil that is caught. Typically, the gap distance 240 is chosen large enough that the cutting effect of opposite knives 235 is still effective, but that the knives have a substantial gap 240, of about 1-5 mm.

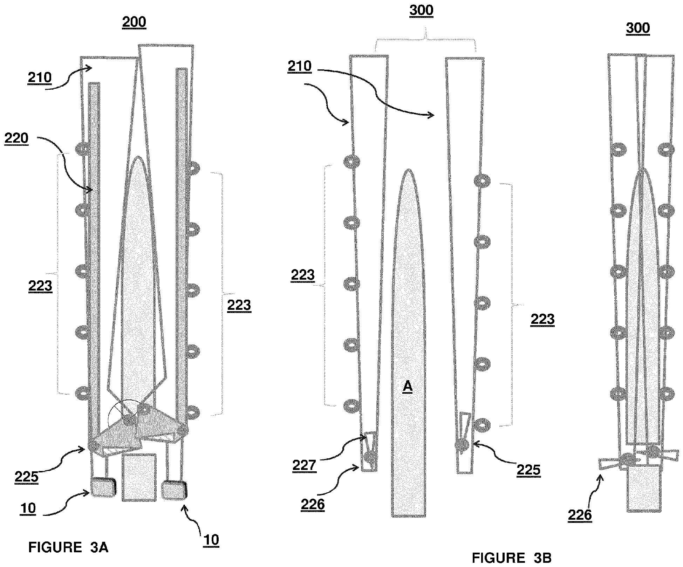

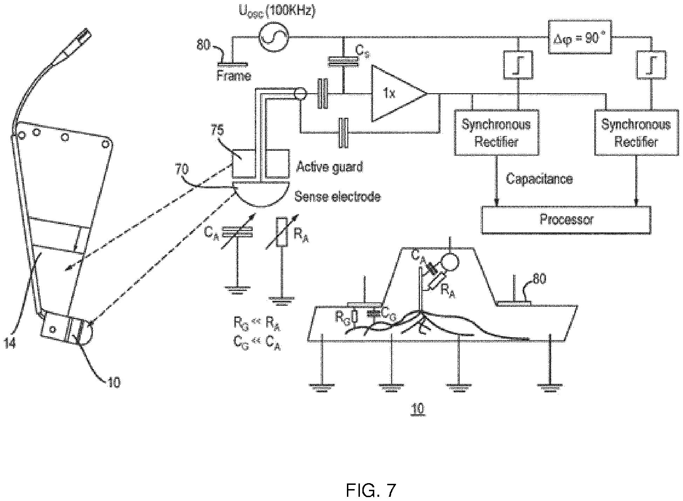

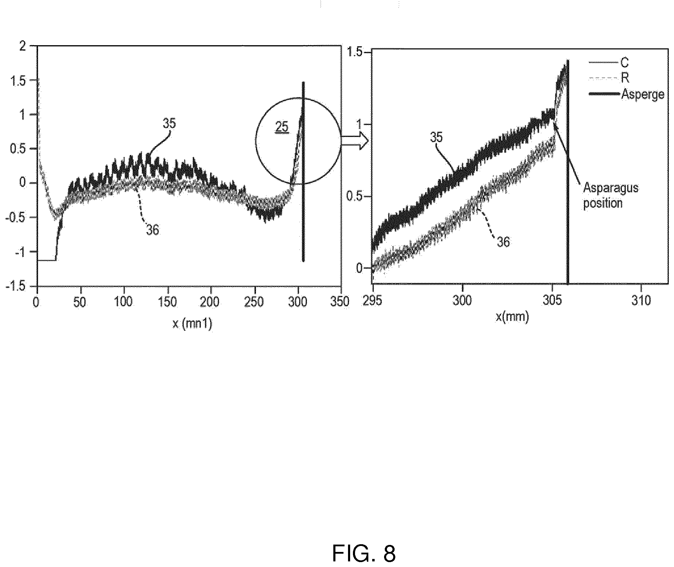

Figure 3A shows an exemplary embodiment of a cutting tool 200 with a linkage similar to the embodiment in Figure 2. In the figure and according to the invention a catch structure is formed by a series of bars 223 laterally extending from the link arm 220 along a length of an asparagus A to be caught. A proximity sensor, further detailed with reference to Figures 7 and 8, may be attached directly on the linkage, in particular link arm 210 that is pushed into the ground by an actuator (see Figure 9).

In the embodiment shown, linkage comprises four link arms 210, 220 with catch structure 223 for catching the asparagus A when exerting a cutting movement by knives 225. The knives 225 are rotated by relative movement of link arms 210, 220 and are arranged opposite each other to cut the asparagus A from both sides.

In Figure 3B a slightly different knife concept is shown, wherein knives 226 are rotatable by a self aligning fin structure 227. As can be seen in Figure 3B, neighbouring link arms 221 are brought to each other, so that the elastic bars clamp 223 the asparagus A. In the shown embodiment, the knives 226 are of a self aligning type, that is, that they follow the direction of movement of the link arm 220, due to a fin structure 227 that is arranged with a pivot point, so that the fin structure aligns the knife 226 in the direction of movement. In this way, when extracting the link arms 220 in Figure 3B, the knife rotates, due to force exerted on the fin structure, and the knives 226 meanwhile cut asparagus A from both sides.

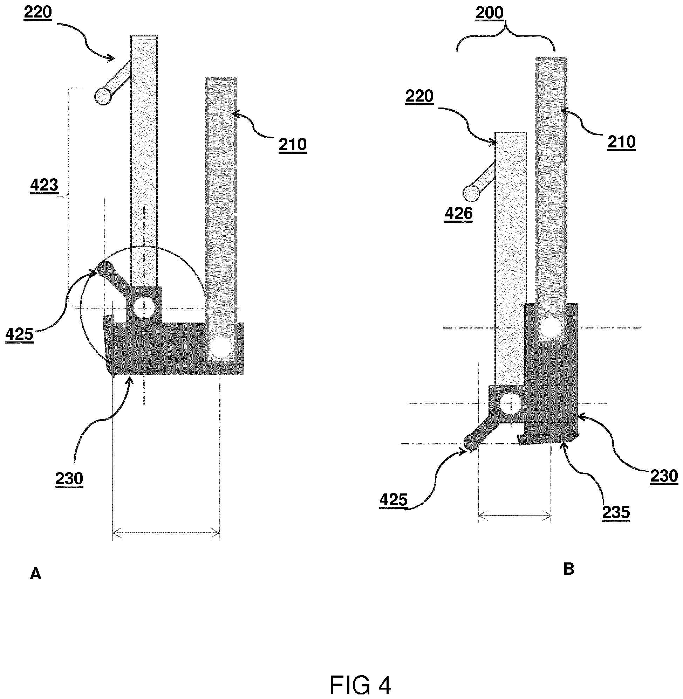

In Figure 4 and according to the invention an alternative catch structure 423 is shown wherein the cutting edge part 230 is provided with a bottom bar 425 movable with the cutting edge part 230, so that, by moving into the cutting position (see Fig 4B), an asparagus is prevented in the catch structure 423 from axial displacement by the bottom bar 425. Accordingly, at the bottom of the linkage 200, a catch is formed by knife 235 - rotated in horizontal position - preventing longitudinal displacement of an asparagus, and bottom bar 425, rotated to a corner position, and top bar 426 preventing lateral displacement, the bar 426, affixed to link arm 220 driving the knife rotation.

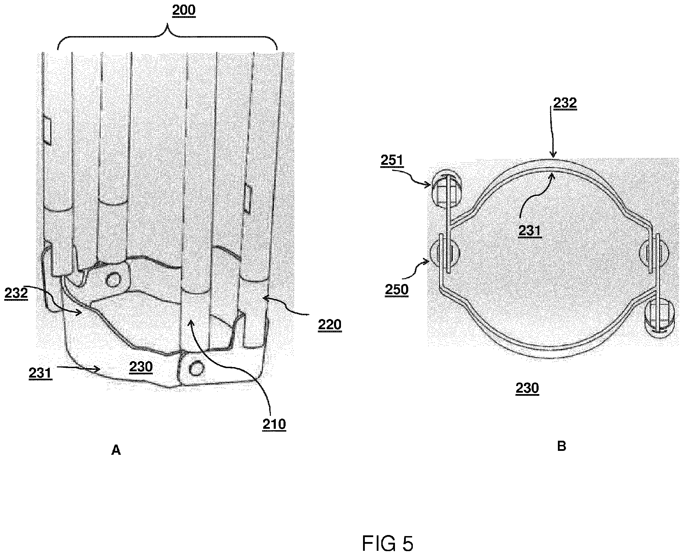

Figure 5 shows an alternative variation of a linkage 200, which distinguishes from the embodiment of Figure 2 by link arms arranged on opposite sides of the hinge parts, with hinge parts 250, 251 coupling to link arms 210 and 220 respectively for relative displacement, resulting in rotation of the cutting part 230, and leaving the cutting edge part 230 substantially free from the linkage, except for its opposed hinge parts. This embodiment may have an advantage that it penetrates the soil more easily, without damaging the neighbouring sprouts, by coupling the link arms close together. Figure 5B shows a bottom sight of the cutting part 230 in its circumference. Advantageously, edge part 230 is designed with a conical form with a proximal base part 232 proximal to the linkage 200 and a distal part of smaller diameter 231 distally extending. Such a design facilitates penetrating in sandy soil, where otherwise the cutting parts 230 would find large reaction forces. As a further advancement, hinge parts 250 251 are designed with single overlapping parts, thus providing very thin wall thicknesses of the edge part 230 along its circumference.

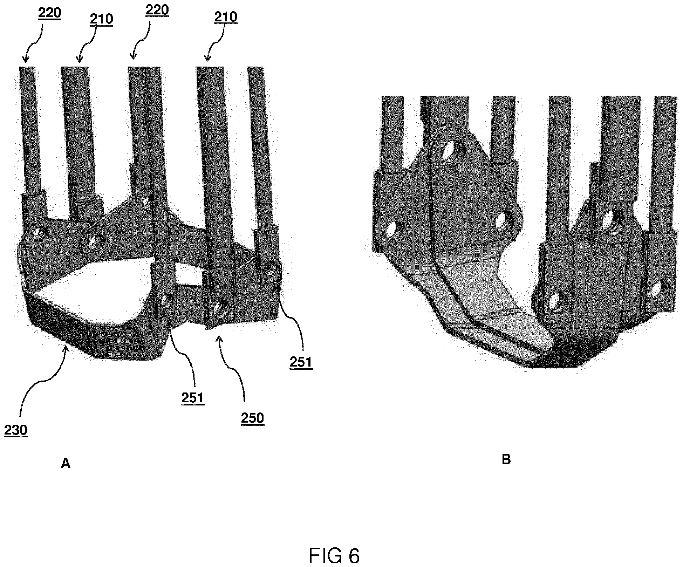

Figure 6 shows a different embodiment, wherein cutting parts 230 are actuated by two opposed link arms 220, arranged in close vicinity of hinge 250 coupling link arm 210. Link arm 210 and Link arms 220, by making a relative axial movement, rotate the cutting parts from an open position (figure A) to a closed position (Figure B).

As a non limiting example, Figure 7 shows a proximity sensor 10 and a schematic electrical diagram of a proximity sensor 10 of an embodiment. The proximity sensor 10 may be arranged to the linkage 200, as for example illustrated in Figure 3A or may be provided as a separate device that is actuated into the ground for asparagus detection. It comprises a sense electrode 70 and detection circuitry to detect a capacitive and a resistive impedance value. The sense electrode 70 is in close proximity of a guard electrode 75 that is actively held at a stabilizing voltage relative to the sense electrode. By having the guard electrode at a stabilizing voltage a higher forward sensitivity of the electrode 70 is achieved.

The proximity sensor 10 is arranged for detection of asparagus 5 by taking into account typical properties for asparagus, such as the water content of typical asparagus. Other properties can also be used for tuning the proximity sensor 10. The capacitive impedance value 10 can be used to measure a level indicative of moisture. Typically sensed soil moisture levels (e.g. 5-15%) are substantially lower than the sensed asparagus 5 moisture levels (>90%) by the proximity sensor 10, which enables accurate subsurface asparagus 5 proximity detection. A voltage is supplied at a pilot frequency (e.g. 100kHz) to the proximity sensor 10. A capacitive and/or a resistive value can be measured from the sensed signal of the impedance proximity sensor 10. Current leakage to the soil is observed with the proximity sensor 10 in the ground. A closed circuit can be obtained by means of a grounding frame 80, e.g. a metal wheel inserted into the ground. The current which is in phase (resistive term) with the voltage and the current with a 90 degrees phase change (capacitive term) are measured. The obtained capacitive term and resistive term can be used for measuring an indication of moisture. Typically, in case of very moist soil better results are obtained by using the capacitive term, because moist soil has a higher dielectric constant, thus resulting a higher C value, while the resistive becomes worse (due to more short circuit, from leaking directly to ground). In dry soil, the resistive term may provide better results than the capacitive term for detection of asparagus. Therefore, depending on the humidity of the soil, more accurate information can be extracted from the capacitive or the resistive signal measured by the proximity sensor 10. Therefore, a capacitive proximity sensor or resistive proximity sensor can be used stand-alone as a proximity sensor 10. Advantageously, both can be used to obtain more accurate results. For example, if an air filled cavity in the soil is encountered by the proximity sensor 10, this may be well detected in the resistive term (much higher signal), while the capacitive term will decrease, reacting in an opposite manner. When an asparagus is encountered below the ground surface 12, both the capacitive term and the resistive term will typically increase. Thus, by taking into account different trends of the capacitive and resistive signals, ground cavities can be distinguished. This may reduce the risk of false positives for the subsurface detection of asparagus. A time averaged - i.e. low pass filtered change in both capacitive and resistive measurement values above a practical threshold is found to be a reliable detection indicator for proximity presence of the asparagus.

In furtherance of the example shown in Figure 7, Figure 8 shows a graph of sensed data of an embodiment. The capacitive signal 35 and the resistive signal 36 of a proximity sensor 10 is plotted while the proximity sensor 10 is moved towards an asparagus 5. While the distance of the proximity sensor 10 to the asparagus 5 is decreased, at a certain point when the asparagus 5 enters the proximity detection range 25 of the proximity sensor 10, the value of both the capacitive signal 35 and the resistive signal 36 is increased in the vicinity of the asparagus 5. As can be seen from the plots, it is possible to perform a contactless detection of the asparagus 5, since the values in this example start to increase substantially starting from a distance of approximately 10 mm from the asparagus 5.

Figure 9 shows an embodiment of an actuator assembly part arranged to drive linkage 200. In the exemplary embodiment, a forked connection 300 drives opposed link arms 220 relative to the fixed arms 210 that push the cutting edge parts 230 into the ground. The forked connection is hingedly connected to the fixed assembly part, so that the hinge 310 translates the actuator rod 320 drive movement, via the forked connection to the link arms 220.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a hard disk, solid state disk, a CD ROM or a semiconductor ROM, or another magnetic recording medium, for example a floppy disc. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk drive, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

In various embodiments, the controller can communicate using wireless systems, wired systems, or a combination of both. When implemented as a wired system, the system may include components and interfaces suitable for communicating or wired communications media, such as input/output (I/O) adapters, physical connectors to connect the I/O adapter with a corresponding wired communications medium. When implemented as a wireless system, the system may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. A wireless communication device may be included in order to transmit and receive signals using various suitable wireless communications techniques. Such techniques may involve communications across one or more wireless networks. Exemplary wireless networks include, but are not limited to, cellular networks, wireless local area networks (WLANs, cfr. WiFi), wireless personal area networks (WPANs), wireless metropolitan area network (WMANs), satellite networks, et cetera. In communicating across such networks, the transmitter may operate in accordance with one or more applicable standards in any version.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims.

## Claims

1. System (100) for harvesting asparagus (5) in ground (60), the system (100) comprising a cutting tool (14) connectable to an actuator, said cutting tool movable, controlled by said actuator, relative to an asparagus (5), for performing localized harvesting of the asparagus (5) by the cutting tool (14), wherein during localized harvesting, the cutting tool (14) is moved by the actuator to a cutting depth for cutting the asparagus (5), said cutting tool (14) comprising a cutting edge part (230) and a linkage (200) connecting the cutting edge part (230) to the actuator, in order to exert a cutting movement of the cutting edge part (230) from a rest position to a cutting position wherein the linkage (200) comprises at least one link arm (210) with a catch structure (423) for catching the asparagus (A) when exerting the cutting movement, wherein the linkage (200) comprises at least two link arms (210, 220) arranged for relative movement to each other, said two link arms (210, 220) pivotally arranged relative to said cutting edge part (230), so that the cutting edge (230) is pivoted from the rest position to the cutting position, **characterized in that** the catch structure (423) on the at least one link arm (210) is arranged opposite a second link arm (220) that catches the asparagus (5) into the catch structure (423) **in that** the catch structure (423) is formed by a series of bars (223) laterally extending from the link arm (220) along a length of an asparagus (5) to be caught and **in that** the cutting edge part (230) is provided with a bottom bar (425) movable with the cutting edge part (230), so that, by moving into the cutting position, an asparagus (5) is prevented in the catch structure (423) from axial displacement by the bottom bar(425).

2. System according to claim 1, wherein the linkage (200) comprises a rod (220) connectable to the actuator, said rod (220) formed with distal parts forming first hinged connections (250) on opposite ends of the cutting edge part (230), wherein the cutting edge (230) is further connected to a link arm (210) by a second hinged connection (251), arranged to pivot the cutting edge (230) around the first hinged connection (250).

3. System according to claim 2, wherein the cutting edge part (230) has a conical form with a proximal base part (232) proximal to the linkage (200), and a distal part (231) extending distally away from the linkage (200), having a smaller diameter than the proximal base part (232).

4. System according to claim 1, wherein the cutting tool (100) is provided with two cutting edge parts (230) that are provided opposite to each other, so that an asparagus (5) is cut on opposite sides, wherein the cutting edge parts (230) in the cutting position slightly overlap (240) at different heights relative to an asparagus (5).

5. System according to claim 1, wherein a catch structure (423) is provided by elastic bars (223) spanned between two neigbouring link arms (210,220).

6. System according to claim 5, wherein the two neighbouring link arms (220) are brought to each other by the actuator, so that the elastic bars (223) clamp the asparagus (5).

7. System according to claim 1, wherein a cutting edge part (230) is provided at the end of a link arm (210), and the cutting edge (230) is brought in a cutting position by a rotary movement of the link arm (210).

8. System according to any one of the preceding claims, wherein at least one proximity sensor (10) is arranged on the cutting tool (100), and localized harvesting is based on the location of the asparagus (5) detected by the proximity sensor (10).

9. System according to claim 8, further comprising an actuator arranged for moving the cutting tool (100); and a controller arranged for controlling the movement of the cutting tool (100);
- wherein the at least one proximity sensor (10) is arranged for local proximity detection of an asparagus (5) while being located below the ground surface(12); and
- wherein the actuator is arranged for adjusting said movement path of the proximity sensor (10) upon local proximity detection of an asparagus (5) by the at least one proximity sensor (10).

10. System according to claim 9, wherein the proximity sensor (10) is arranged for performing contactless local proximity detection with respect to the detected asparagus (5).

11. System according to any one of the claims 9-10, wherein the controller is arranged to adjust the movement path of the cutting tool (100) so as to evade collision with the asparagus (5) detected by the proximity sensor (10), while registering a location of the proximity sensor (10) where the asparagus (5) is detected.

12. System according to any one of the claims 9-10, wherein the controller is arranged to adjust the movement path of at least one proximity sensor (10) to follow a detected outer surface of the detected asparagus (5) from a scanning depth to a cutting depth.

13. System according to any one of the claims 8-12, wherein the proximity sensor (10) comprises at least one electrical impedance sensor (10) for proximity detection of asparagus (5) below the ground surface (12).

## Patentansprüche

1. System (100) zum Ernten von Spargel (5) im Boden (60), wobei das System (100) ein Schneidwerkzeug (14) umfasst, das mit einem Aktuator verbunden werden kann, wobei das Schneidwerkzeug beweglich ist und von dem Aktuator relativ zu einem Spargel (5) gesteuert wird, zum Durchführen einer lokalisierten Ernte des Spargels (5) durch das Schneidwerkzeug (14), wobei während der lokalisierten Ernte das Schneidwerkzeug (14) durch den Aktuator zu einer Schnitttiefe zum Schneiden des Spargels (5) bewegt wird, wobei das Schneidwerkzeug (14) ein Schneidkantenteil (230) und ein Gestänge (200) umfasst, das das Schneidkantenteil (230) mit dem Aktuator verbindet, um eine Schneidbewegung des Schneidkantenteils (230) von einer Ruheposition zu einer Schneidposition auszuüben, wobei das Gestänge (200) wenigstens einen Verbindungsarm (210) mit einer Fangstruktur (423) zum Auffangen des Spargels (A) beim Ausüben der Schneidbewegung umfasst, wobei das Gestänge (200) wenigstens zwei Verbindungsarme (210, 220) umfasst, die für eine Bewegung relativ zueinander angeordnet sind, wobei die beiden Verbindungsarme (210, 220) relativ zu dem Schneidkantenteil (230) schwenkbar angeordnet sind, so dass die Schneidkante (230) von der Ruheposition in die Schneidposition geschwenkt wird, **dadurch gekennzeichnet, dass** die Fangstruktur (423) an dem wenigstens einen Verbindungsarm (210) gegenüber einem zweiten Verbindungsarm (220) angeordnet ist, der den Spargel (5) in die Fangstruktur (423) auffängt, wobei die Fangstruktur (423) durch eine Reihe von Stangen (223) gebildet wird, die sich seitlich vom Verbindungsarm (220) entlang einer Länge eines Spargels (5) erstrecken, der aufgefangen werden soll, und wobei das Schneidkantenteil (230) mit einer unteren Stange (425) versehen ist, die mit dem Schneidkantenteil (230) beweglich ist, so dass durch Bewegen in die Schneidposition verhindert wird, dass ein Spargel (5) in der Fangstruktur (423) durch die untere Stange (425) axial verschoben wird.

2. System nach Anspruch 1, wobei das Gestänge (200) eine Stange (220) umfasst, die mit dem Aktuator verbunden werden kann, wobei die Stange (220) mit distalen Teilen ausgebildet ist, die erste Scharnierverbindungen (250) an gegenüberliegenden Enden des Schneidkantenteils (230) bilden, wobei die Schneidkante (230) ferner mit einem Verbindungsarm (210) durch eine zweite Scharnierverbindung (251) verbunden ist, die angeordnet ist, um die Schneidkante (230) um die erste Scharnierverbindung (250) zu schwenken.

3. System nach Anspruch 2, wobei der Schneidkantenteil (230) eine konische Form mit einem proximalen Basisteil (232) proximal zum Gestänge (200) und einem distalen Teil (231) aufweist, der sich distal von dem Gestänge (200) weg erstreckt, mit einem kleineren Durchmesser als der proximale Basisteil (232).

4. System nach Anspruch 1, wobei das Schneidwerkzeug (100) mit zwei einander gegenüberliegenden Schneidkantenteilen (230) versehen ist, so dass ein Spargel (5) auf gegenüberliegenden Seiten geschnitten wird, wobei sich die Schneidkantenteile (230) in der Schneidposition in unterschiedlichen Höhen relativ zu einem Spargel (5) leicht überlappen (240).

5. System nach Anspruch 1, wobei eine Fangstruktur (423) durch elastische Stangen (223) bereitgestellt wird, die zwischen zwei benachbarten Verbindungsarmen (210,220) gespannt sind.

6. System nach Anspruch 5, wobei die zwei benachbarten Verbindungsarme (220) durch den Aktuator zueinander gebracht werden, so dass die elastischen Stangen (223) den Spargel (5) klemmen.

7. System nach Anspruch 1, wobei ein Schneidkantenteil (230) am Ende eines Verbindungsarms (210) vorgesehen ist und die Schneidkante (230) durch eine Drehbewegung des Verbindungsarms (210) in eine Schneidposition gebracht wird.

8. System nach einem der vorhergehenden Ansprüche, wobei wenigstens ein Näherungssensor (10) an dem Schneidwerkzeug (100) angeordnet ist und die lokalisierte Ernte auf der Position des Spargels (5) basiert, der durch den Näherungssensor (10) erfasst wird.

9. System nach Anspruch 8, ferner umfassend einen Aktuator, der zum Bewegen des Schneidwerkzeugs (100) angeordnet ist; und eine Steuerung zum Steuern der Bewegung des Schneidwerkzeugs (100);
- wobei der wenigstens eine Näherungssensor (10) zur lokalen Näherungserfassung eines Spargels (5) angeordnet ist, während er sich unter der Bodenoberfläche (12) befindet; und
- wobei der Aktuator zum Einstellen des Bewegungsweges des Näherungssensors (10) bei lokaler Näherungserfassung eines Spargels (5) durch den wenigstens einen Näherungssensor (10) angeordnet ist.

10. System nach Anspruch 9, wobei der Näherungssensor (10) zur Durchführung einer berührungslosen lokalen Näherungserfassung in Bezug auf den erfassten Spargel (5) angeordnet ist.

11. System nach einem der Ansprüche 9 bis 10, wobei die Steuerung so angeordnet ist, dass sie den Bewegungsweg des Schneidwerkzeugs (100) so einstellt, dass eine Kollision mit dem Spargel (5) vermieden wird, der von dem Näherungssensor (10) erfasst wird, während ein Ortes des Näherungssensors (10) registriert wird, an dem der Spargel (5) erfasst wird.

12. System nach einem der Ansprüche 9 bis 10, wobei die Steuerung so angeordnet ist, dass sie den Bewegungsweg von wenigstens einem Näherungssensor (10) einstellt, um einer erfassten Außenfläche des erfassten Spargels (5) von einer Abtasttiefe zu einer Schnitttiefe zu folgen.

13. System nach einem der Ansprüche 8 bis 12, wobei der Näherungssensor (10) wenigstens einen elektrischen Impedanzsensor (10) zur Näherungserfassung von Spargel (5) unter der Bodenoberfläche (12) umfasst.

## Revendications

1. Système (100) pour récolter des asperges (5) dans le sol (60), le système (100) comprenant un outil de coupe (14) pouvant être raccordé à un actionneur, ledit outil de coupe étant mobile, commandé par ledit actionneur, par rapport à une asperge (5) pour réaliser la récolte localisée de l'asperge (5) par l'outil de coupe (14), dans lequel pendant la récolte localisée, l'outil de coupe (14) est déplacé par l'actionneur jusqu'à une profondeur de coupe pour couper l'asperge (5), ledit outil de coupe (14) comprenant une partie de bord de coupe (230) et une liaison (200) raccordant la partie de bord de coupe (230) à l'actionneur, afin d'exercer un mouvement de coupe de la partie de bord de coupe (230) d'une position de repos à une position de coupe, dans lequel la liaison (200) comprend au moins un bras de liaison (210) avec une structure de préhension (423) pour saisir l'asperge (A) lorsque l'on exerce le mouvement de coupe, dans lequel la liaison (200) comprend au moins deux bras de liaison (210, 220) agencés pour le déplacement relatif l'un par rapport à l'autre, lesdits deux bras de liaison (210, 220) étant agencés de manière pivotante par rapport à ladite partie de bord de coupe (230), de sorte que le bord de coupe (230) est pivoté de la position de repos à la position de coupe, **caractérisé en ce que** la structure de préhension (423) sur le au moins un bras de liaison (210) est agencée à l'opposé d'un second bras de liaison (220) qui saisit l'asperge (5) dans la structure de préhension (423) **en ce que** la structure de préhension (423) est formée par une série de barres (223) s'étendant latéralement à partir du bras de liaison (220) le long d'une longueur d'une asperge (5) à saisir et **en ce que** la partie de bord de coupe (230) est prévue avec une barre inférieure (425) mobile avec la partie de bord de coupe (230) de sorte qu'en se déplaçant dans la position de coupe, on empêche le déplacement axial d'une asperge (5) dans la structure de préhension (423) par la barre inférieure (425).

2. Système selon la revendication 1, dans lequel la liaison (200) comprend une tige (220) pouvant être raccordée à l'actionneur, ladite tige (220) étant formée avec des parties distales formant des premiers raccordement articulés (250) sur les extrémités opposées de la partie de bord de coupe (230), dans lequel le bord de coupe (230) est en outre raccordé à un bras de liaison (210) par un second raccordement articulé (251) agencé pour faire pivoter le bord de coupe (230) autour du premier raccordement articulé (250).

3. Système selon la revendication 2, dans lequel la partie de bord de coupe (230) a une forme conique avec une partie de base proximale (232) à proximité de la liaison (200), et une partie distale (231) s'étendant de manière distale à distance de la liaison (200), ayant un plus petit diamètre que la partie de base proximale (232) .

4. Système selon la revendication 1, dans lequel l'outil de coupe (100) est prévu avec deux parties de bord de coupe (230) qui sont prévues à l'opposé l'une de l'autre, de sorte qu'une asperge (5) est coupée sur les côtés opposés, dans lequel les parties de bord de coupe (230) dans la position de coupe se chevauchent (240) légèrement à des hauteurs différentes par rapport à une asperge (5).

5. Système selon la revendication 1, dans lequel une structure de préhension (423) est fournie par des barres élastiques (223) tendues entre deux bras de liaison (210, 220) voisins.

6. Système selon la revendication 5, dans lequel les deux bras de liaison (220) voisins sont rapprochés par l'actionneur, de sorte que les barres élastiques (223) serrent l'asperge (5).

7. Système selon la revendication 1, dans lequel une partie de bord de coupe (230) est prévue à l'extrémité d'un bras de liaison (210), et le bord de coupe (230) est amené dans une position de coupe par un mouvement de rotation du bras de liaison (210).

8. Système selon l'une quelconque des revendications précédentes, dans lequel au moins un capteur de proximité (10) est agencé sur l'outil de coupe (100) et la récolte localisée est basée sur l'emplacement de l'asperge (5) détecté par le capteur de proximité (10) .

9. Système selon la revendication 8, comprenant en outre un actionneur agencé pour déplacer l'outil de coupe (100) ; et un organe de commande agencé pour commander le déplacement de l'outil de coupe (100) ;
dans lequel le au moins un capteur de proximité (10) est agencé pour la détection de proximité locale d'une asperge (5) tout en étant positionné au-dessous de la surface du sol (12) ; et
dans lequel l'actionneur est agencé pour ajuster ladite trajectoire de déplacement du capteur de proximité (10) suite à la détection de proximité locale d'une asperge (5) par le au moins un capteur de proximité (10) .

10. Système selon la revendication 9, dans lequel le capteur de proximité (10) est agencé pour réaliser la détection de proximité locale sans contact par rapport à l'asperge (5) détectée.

11. Système selon l'une quelconque des revendications 9 à 10, dans lequel l'organe de commande est agencé pour ajuster la trajectoire de déplacement de l'outil de coupe (100) afin d'éviter la collision avec l'asperge (5) détectée par le capteur de proximité (10), tout en enregistrant un emplacement du capteur de proximité (10) où l'asperge (5) est détectée.

12. Système selon l'une quelconque des revendications 9 à 10, dans lequel l'organe de commande est agencé pour ajuster la trajectoire de déplacement d'au moins un capteur de proximité (10) afin de suivre une surface externe détectée de l'asperge (5) détectée d'une profondeur de balayage à une profondeur de coupe.

13. Système selon l'une quelconque des revendications 8 à 12, dans lequel le capteur de proximité (10) comprend au moins un capteur d'impédance électrique (10) pour la détection de proximité de l'asperge (5) au-dessous de la surface du sol (12).
